# EUROPÄISCHE PATENTSCHRIFT

(11) **EP 3 427 538 B1**
(45) Veröffentlichungstag und Bekanntmachung des Hinweises auf die Patenterteilung: **13.11.2019**
(21) Anmeldenummer: 17711186.1
(22) Anmeldetag: 17.03.2017
(51) Int. Cl.: H04L 12/40, H04L 12/46, H04W 84/12, H04W 88/06, H04W 12/08

(54) **REDUNDANT BETREIBBARES INDUSTRIELLES KOMMUNIKATIONSSYSTEM, VERFAHREN ZU DESSEN BETRIEB UND FUNK-TEILNEHMERSTATION**
REDUNDANT INDUSTRIAL COMMUNICATION SYSTEM, METHOD OF OPERATING THE SAME AND WIRELESS DEVICE STATION
SYSTEME DE COMMUNICATION INDUSTRIEL POUVANT FONCTIONNER DE MANIERE REDONDANTE, SON PROCEDE DE FONCTIONNEMENT ET POSTE D'ABONNÉ RADIO

(30) Priorität: 29.04.2016 EP 16167676
(43) Veröffentlichungstag der Anmeldung: 16.01.2019
(73) Patentinhaber: Siemens Aktiengesellschaft, 80333 München (DE)
(72) Erfinder: MÜLLER, Jörg, 76351 Linkenheim (DE)
(86) Internationale Anmeldenummer: PCT/EP2017/056359
(87) Internationale Veröffentlichungsnummer: WO 2017/186404

(56) Entgegenhaltungen:
- WO-A1-2014/187893
- US-A1- 2013 028 176
- CENA GIANLUCA ET AL: "An enhanced MAC to increase reliability in redundant Wi-Fi networks", 2014 10TH IEEE WORKSHOP ON FACTORY COMMUNICATION SYSTEMS (WFCS 2014), IEEE, 5. Mai 2014 (2014-05-05), Seiten 1-10, XP032608485, DOI: 10.1109/WFCS.2014.6837591
- GIANLUCA CENA ET AL: "Dynamic duplicate deferral techniques for redundant Wi-Fi networks", PROCEEDINGS OF THE 2014 IEEE EMERGING TECHNOLOGY AND FACTORY AUTOMATION (ETFA), 1. September 2014 (2014-09-01), Seiten 1-8, XP055288729, DOI: 10.1109/ETFA.2014.7005156 ISBN: 978-1-4799-4845-1
- MARKUS RENTSCHLER ET AL: "Performance analysis of parallel redundant WLAN", PROCEEDINGS OF 2012 IEEE 17TH INTERNATIONAL CONFERENCE ON EMERGING TECHNOLOGIES & FACTORY AUTOMATION (ETFA 2012) : KRAKOW, POLAND, 17 - 21 SEPTEMBER 2012, IEEE, PISCATAWAY, NJ, 17. September 2012 (2012-09-17), Seiten 1-8, XP032350187, DOI: 10.1109/ETFA.2012.6489647 ISBN: 978-1-4673-4735-8
- IEC ED - IEC: "Part 3: Parallel Redundancy Protocol (PRP) andHigh-availability Seamless Redundancy (HSR)", INTERNET CITATION, 31. Dezember 2010 (2010-12-31), Seiten 1-62, XP002680227, Gefunden im Internet: URL:http://lamspeople.epfl.ch/kirrmann/Pub s/IEC_61439-3/WG15-12-04d_62439-3_AMD_HK_1 01109.pdf [gefunden am 2012-07-18]

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie PROFINET, PROFIBUS oder Real-Time-Ethernet, verwendet.

Äußerst problematisch sind Unterbrechungen von Kommunikationsverbindungen zwischen industriellen Automatisierungsgeräten oder Rechnereinheiten eines industriellen Automatisierungssystems. Neben einem Informationsverlust kann dies beispielsweise zu einer nachteiligen Wiederholung einer Übermittlung von Mess- bzw. Diagnoseergebnissen oder von Dienstanforderungen führen. Hierdurch wird eine zusätzliche Auslastung von Kommunikationsverbindungen des industriellen Automatisierungssystems verursacht, was wiederum zu weiteren Systemstörungen oder -fehlern führen kann.

Darüber hinaus können nicht oder nicht vollständig übermittelte Nachrichten beispielsweise einen Übergang oder Verbleib eines industriellen Automatisierungssystems in einen sicheren Betriebszustand verhindern. Im ungünstigsten Fall kann es zu einem Ausfall einer kompletten Produktionsanlage und zu einem kostspieligen Produktionsstillstand kommen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle zur stoßfreien redundanten Übertragung von Nachrichten in hochverfügbaren industriellen Kommunikationsnetzen entwickelt worden. Hierzu zählen High-availability Seamless Redundancy (HSR) und Parallel Redundancy Protocol (PRP), die im Standard IEC 62439-3 definiert sind und bei Netzstörungen eine umschaltstoßfreie Übertragung von Nachrichten mit äußerst geringen Erholungszeiten ermöglichen. Entsprechend High-availability Seamless Redundancy und Parallel Redundancy Protocol wird jede Nachricht von einem sendenden Kommunikationsgerät dupliziert und auf zwei verschiedenen Wegen zu einem Empfänger geschickt. Durch ein empfängerseitiges Kommunikationsgerät werden Duplikate darstellende redundante Nachrichten aus einem empfangenen Datenstrom ausgefiltert.

Im Standard IEC 62439-3 sind für das Parallel Redundancy Protocol (PRP) aufgrund verhältnismäßig langer Latenzlaufzeiten in Drahtlos-Kommunikationssystemen und eines dadurch bedingten nicht-deterministischen Übertragungsverhaltens bislang ausschließlich kabelgebundene Übertragungsstrecken vorgeschrieben. In "Towards a Reliable Parallel Redundant WLAN Black Channel", Markus Rentschler, Per Laukemann, IEEE 2012 wird eine Eignung von WLAN-Übertragungsstrecken in PRP-Kommunikationsnetzen untersucht. Mittels paralleler Anwendung unterschiedlicher Diversitätstechniken für beispielsweise Raum, Zeit und Frequenz können in WLAN-Kommunikationsnetzen Auswirkungen von stochastischem Kanalschwund hinreichend kompensiert werden.

Aus EP 2 712 124 A1 ist ein redundant betriebenes industrielles Kommunikationssystem mit redundant an ein industrielles Kommunikationsnetz angebundenen Kommunikationsgeräten bekannt, bei dem eine Nachrichtenübermittlung zumindest abschnittsweise kabellos erfolgt. Im industriellen Kommunikationsnetz ist eine Mehrzahl von Puffer-Speichereinheiten für an einem Netzknoten kabelgebunden empfangene und von diesem kabellos zu sendende Nachrichtenelemente vorgesehen. Bei Überschreiten einer maximalen Puffer-Größe wird ein ältestes in der jeweiligen Puffer-Speichereinheit befindliches Nachrichtenelement gelöscht. Bis zu einem Überschreiten der maximalen Puffer-Größe wird das älteste Nachrichtenelement als nächstes kabellos zu sendendes Nachrichtenelement ausgewählt.

In DE 10 2012 209509 A1 ist eine Vorrichtung zur sicheren Datenübertragung zwischen einem mobilen Teilnehmer, der zumindest eine Übertragungsvorrichtung aufweist, und einem stationären Empfänger beschrieben. Dabei kann der mobile Teilnehmer zwischen mehreren Funkzellen wechseln. Jede Funkzelle weist zumindest eine Übertragungsvorrichtung auf, die drahtgebunden an zumindest ein Netzwerk angeschlossen ist. Der stationäre Empfänger ist ebenfalls drahtgebunden an das zumindest eine Netzwerk angeschlossen. Sowohl die drahtlose Übertragung zwischen dem mobilen Teilnehmer und seiner jeweils zugehörigen Übertragungsvorrichtung als auch die drahtgebundene Datenübertragung zwischen der Übertragungsvorrichtung und dem zumindest einen zugehörigen Netzwerk erfolgt redundant. Der stationäre Empfänger ist redundant und drahtgebunden an das Netzwerk angeschlossen.

Zur hochverfügbaren Anbindung von Automatisierungsgeräten mit vollständig unabhängigen Ethernet-Schnittstellen innerhalb eines redundanten Kommunikationsnetzes an einfach angebundene Automatisierungsgeräte wird entsprechend DE 10 2013 211406 A1 für das jeweilige einfach angebundene Automatisierungsgerät ein Y-Switch verwendet. Dabei ist der Y-Switch über einen ersten bzw. zweiten Port mit einem ersten bzw. Teilnetz des redundanten Kommunikationsnetzes verbunden, während er über einen dritten Port mittelbar oder unmittelbar mit dem einfach angebundenen Automatisierungsgerät verbunden ist. Darüber hinaus werden eingehende Datenrahmen am ersten, zweiten bzw. dritten Port einem ersten, zweiten bzw. dritten VLAN zugeordnet. Zusätzlich werden der erste bzw. zweite Port als Untagged Member für das erste und dritte VLAN bzw. für das zweite und dritte VLAN eingerichtet. Der dritte Port wird für alle drei VLANs als Untagged Member eingerichtet. An den ersten beiden Ports gelernte Unicast-MAC-Adressen werden automatisch als statischer Eintrag für das dritte VLAN übernommen. Bei Löschen einer an den ersten beiden Ports gelernten Unicast-MAC-Adresse erfolgt auch ein Löschen des korrespondierenden statischen Eintrags für das dritte VLAN.

Aus "An enhanced MAC to increase reliability in redundant Wi-Fi networks" (Gianluca Cena et al.), 2014 10TH IEEE WORKSHOP ON FACTORY COMMUNICATION SYSTEMS (WFCS 2014), IEEE, 5. Mai 2014 (2014-05-05), Seiten 1-10 ist ein Verfahren entsprechend dem Oberbegriff von Anspruch 1 bekannt.

Der vorliegenden Erfindung liegt die Aufgabe zugrunde, ein redundant betreibbares industrielles Kommunikationssystem mit Kabellos-Übertragungsstrecken zu schaffen, das eine hohe Zuverlässigkeit aufweist und eine effiziente Funk-Ressourcennutzung ermöglicht, und ein Verfahren zu dessen Betrieb sowie geeignete Systemkomponenten anzugeben.

Diese Aufgabe wird erfindungsgemäß durch ein Kommunikationssystem mit den in Anspruch 1 angegebenen Merkmalen, durch ein Verfahren mit den in Anspruch 8 angegebenen Merkmalen und durch eine Funk-Teilnehmerstation mit den in Anspruch 14 angegebenen Merkmalen gelöst. Vorteilhafte Weiterbildungen der vorliegenden Erfindung sind in den abhängigen Ansprüchen angegeben.

Das erfindungsgemäße Kommunikationssystem umfasst zumindest ein erstes und ein zweites redundant an ein industrielles Kommunikationsnetz angebundenes Kommunikationsgerät mit jeweils zumindest einem ersten und einem zweiten Kommunikationsnetzanschluss. Mit dem ersten und zweiten Kommunikationsnetzanschluss ist eine Signalverarbeitungseinheit verbunden, die eine Multiplexereinheit zur parallelen Weiterleitung zu sendender Datenrahmen an beide Kommunikationsnetzanschlüsse und eine Redundanzbehandlungseinheit zur Verarbeitung von beiden Kommunikationsnetzanschlüssen empfangener Datenrahmen aufweist. Dabei umfasst die Redundanzbehandlungseinheit eine Filtereinheit, die für eine Detektion empfangener redundanter Datenrahmen ausgestaltet und eingerichtet ist, insbesondere durch entsprechende Konfiguration.

Erfindungsgemäß ist das erste Kommunikationsgerät über seinen ersten und über seinen zweiten Kommunikationsnetzanschluss mittel- oder unmittelbar jeweils mit einer Funk-Teilnehmerstation verbunden. Analog dazu ist das zweite Kommunikationsgerät über seinen ersten und über seinen zweiten Kommunikationsnetzanschluss mittel- oder unmittelbar jeweils mit einer Funk-Basisstation verbunden. Eine mittelbare Verbindung kann beispielsweise mittels eines Switches erfolgen, an den das jeweilige Kommunikationsgerät und die jeweiligen Funk-Teilnehmer- bzw. Funk-Basisstationen angeschlossen sind. Die Funk-Teilnehmer- bzw. Funk-Basisstationen können beispielsweise einem Wireless Local Area Network, einem WiMAX-, einem UMTS-, einem LTE-Mobilfunknetz oder einem sonstigen Mobilfunknetz zugeordnet sein. Die Funk-Teilnehmerstationen sind dafür ausgestaltet und eingerichtet, insbesondere konfiguriert, dass sie untereinander Meldungen über verfügbare Funk-Basisstationen austauschen. Darüber hinaus sind die Funk-Teilnehmerstationen dafür ausgestaltet und eingerichtet, dass mittels der Meldungen koordiniert wird, welche der Funk-Teilnehmerstationen momentan bzw. innerhalb eines definierbaren Zeitraums eine exklusive Berechtigung für eine Funkverbindung zu einer ausgewählten Funk-Basisstation hat.

Das erfindungsgemäße Kommunikationssystem bietet als Vorteil, dass durch einen Meldungsaustausch zwischen den beiden Funk-Teilnehmerstationen sichergestellt wird, dass sich die beiden Funk-Teilnehmerstationen insbesondere bei Roaming-Vorgängen nicht gleichzeitig mit derselben Funk-Basisstation verbinden. Erfindungsgemäß sind die Funk-Teilnehmerstationen dafür ausgestaltet und eingerichtet, dass in den Meldungen jeweils eine temporäre exklusive Zuordnung einer Funk-Basisstation zu einer Funk-Teilnehmerstation angegeben wird. Dies gewährleistet eine besonders zuverlässige Zuordnung zwischen Funk-Teilnehmerstationen und Funk-Basisstationen. Darüber hinaus können die Funk-Teilnehmerstationen dafür ausgestaltet und eingerichtet sein, dass mittels der Meldungen bei einem Abbau oder einer ausbleibenden Nutzung einer Funkverbindung zu einer ausgewählten Funk-Basisstation eine Freigabe einer zuvor genutzten Funkverbindung zur ausgewählten Funk-Basisstation erfolgt. Auf diese Weise kann effiziente Funk-Ressourcennutzung erzielt werden.

Entsprechend einer vorteilhaften Ausgestaltung der vorliegenden Erfindung sind zueinander redundante Datenrahmen durch eine einheitliche Sequenznummer gekennzeichnet. Dabei sind die Signalverarbeitungseinheiten des ersten und des zweiten Kommunikationsgeräts für eine Vergabe einer Sequenznummer an einen redundant zu übermittelnden Datenrahmen ausgestaltet und eingerichtet. Vorzugsweise sind die Funk-Teilnehmerstationen dafür ausgestaltet und eingerichtet, dass bei einem erfolgreichen Empfang eines über ein Funknetz gesendeten Datenrahmens empfängerseitig eine Bestätigungsmeldung an eine senderseitige Funk-Teilnehmerstation übermittelt wird. Des weiteren sind die Funk-Teilnehmerstationen bevorzugt dafür ausgestaltet und eingerichtet, dass ein Senden eines redundanten Datenrahmens mit einer Sequenznummer, die einer senderseitig empfangenen Bestätigungsmeldung zugeordnet ist, unterbunden wird. Ist ein Datenrahmen beispielsweise bereits über eine schnellere Funkverbindung übertragen worden, braucht ein zu diesem redundanter Datenrahmen nicht mehr verzögert bzw. über eine langsamere Funkverbindung übertragen zu werden, sondern kann senderseitig verworfen werden. Dies ermöglicht eine effizientere Ressourcenausnutzung.

Vorzugsweise erfolgt eine Übertragung redundant zu übermittelnder Datenrahmen entsprechend Parallel Redundancy Protocol. Dabei können das erste und zweite Kommunikationsgerät beispielsweise eine PRP-Redbox sein. Über eine solche PRP-Redbox kann jeweils ein einfach angebundenes Kommunikationsgerät mit dem industriellen Kommunikationsnetz verbunden sein.

Entsprechend einer weiteren Ausgestaltung des erfindungsgemäßen Funk-Kommunikationssystems sind zumindest ein erstes und ein zweites dem industriellen Kommunikationsnetz zugeordnetes Netzinfrastrukturgerät mit jeweils einer Mehrzahl von Kommunikationsnetzanschlüssen und einem die Kommunikationsnetzanschlüsse miteinander verbindenden Koppelelement vorgesehen. Die Netzinfrastrukturgeräte können beispielsweise Switches sein. Vorzugsweise ist das Koppelelement eines Netzinfrastrukturgeräts ein Hochgeschwindigkeitsbus bzw. ein Backplane Switch mit zugeordnetem Controller. Das erste Kommunikationsgerät ist über seinen ersten und zweiten Kommunikationsnetzanschluss redundant an das erste Netzinfrastrukturgerät angeschlossen, während das zweite Kommunikationsgerät über seinen ersten und zweiten Kommunikationsnetzanschluss redundant an das zweite Netzinfrastrukturgerät angeschlossen ist.

Außerdem sind das erste und zweite Kommunikationsgerät bzw. das erste und zweite Netzinfrastrukturgerät entsprechend der weiteren Ausgestaltung des erfindungsgemäßen Funk-Kommunikationssystems dafür ausgestaltet und eingerichtet, dass vom ersten Kommunikationsnetzanschluss des ersten und des zweiten Kommunikationsgeräts an das jeweilige Netzinfrastrukturgerät übermittelte Datenrahmen einem ersten virtuellen lokalen Netz zugeordnet werden und dass vom zweiten Kommunikationsnetzanschluss des ersten und des zweiten Kommunikationsgeräts an das jeweilige Netzinfrastrukturgerät übermittelte Datenrahmen einem zweiten virtuellen lokalen Netz zugeordnet werden. Während die Funk-Teilnehmerstationen an das erste Netzinfrastrukturgerät angeschlossen sind, sind die Funk-Basisstationen an das zweite Netzinfrastrukturgerät angeschlossen. Darüber hinaus sind die Funk-Teilnehmerstationen dafür ausgestaltet und eingerichtet, dass dem ersten virtuellen lokalen Netz zugeordnete Datenrahmen mittels der ersten Funk-Teilnehmerstation über ein erstes Funknetz gesendet werden und dass dem zweiten virtuellen lokalen Netz zugeordnete Datenrahmen mittels der zweiten Funk-Teilnehmerstation über ein zweites Funknetz gesendet werden. Das erste und zweite Funknetz können mittels einer Funknetz-Kennung identifizierbar sein, beispielsweise mittels eines Service Set Identifier.

Entsprechend dem erfindungsgemäßen Verfahren zum redundanten Betrieb eines industriellen Kommunikationssystems werden zumindest ein erstes und ein zweites Kommunikationsgerät redundant an ein industrielles Kommunikationsnetz angebunden. Dabei weisen das erste und zweite Kommunikationsgerät jeweils zumindest einen ersten und einem zweiten Kommunikationsnetzanschluss und eine mit dem ersten und zweiten Kommunikationsnetzanschluss verbundene Signalverarbeitungseinheit auf. Die Signalverarbeitungseinheit leitet zu sendende Datenrahmen parallel an beide Kommunikationsnetzanschlüsse weiter und detektiert von beiden Kommunikationsnetzanschlüssen empfangene redundante Datenrahmen.

Erfindungsgemäß ist das erste Kommunikationsgerät über seinen ersten und über seinen zweiten Kommunikationsnetzanschluss mittel- oder unmittelbar jeweils mit einer Funk-Teilnehmerstation verbunden. In entsprechender Weise ist das zweite Kommunikationsgerät über seinen ersten und über seinen zweiten Kommunikationsnetzanschluss mittel- oder unmittelbar jeweils mit einer Funk-Basisstation verbunden. Die Funk-Teilnehmerstationen tauschen untereinander Meldungen über verfügbare Funk-Basisstationen aus. Darüber hinaus koordinieren die Funk-Teilnehmerstationen mittels der Meldungen, welche der Funk-Teilnehmerstationen momentan bzw. innerhalb eines definierbaren Zeitraums eine exklusive Berechtigung für eine Funkverbindung zu einer ausgewählten Funk-Basisstation hat. Erfindungsgemäß vermeiden die Funk-Teilnehmerstationen mittels der Meldungen, dass sich mehrere dem ersten Kommunikationsgerät zugeordnete Funk-Teilnehmerstationen während eines Roaming-Vorgangs gleichzeitig mit derselben Funk-Basisstation verbinden.

Die vorliegende Erfindung wird nachfolgend an einem Ausführungsbeispiel anhand der Zeichnung näher erläutert. Es zeigt
- Figur 1: eine schematische Darstellung eines redundanten industriellen Kommunikationssystems mit zwei PRP-Redboxen, die über WLAN-Übertragungsstrecken miteinander verbunden sind,
- Figur 2: eine Detaildarstellung eines ersten Teils des Kommunikationssystems gemäß Figur 1 mit einer ersten PRP-Redbox, einem ersten VLAN-fähigen Switch und mehreren an den ersten Switch angeschlossenen WLAN-Teilnehmerstationen,
- Figur 3: eine Detaildarstellung eines zweiten Teils des Kommunikationssystems gemäß Figur 1 mit einer zweiten PRP-Redbox, einem zweiten VLAN-fähigen Switch und mehreren an den zweiten Switch angeschlossenen WLAN-Basisstationen.

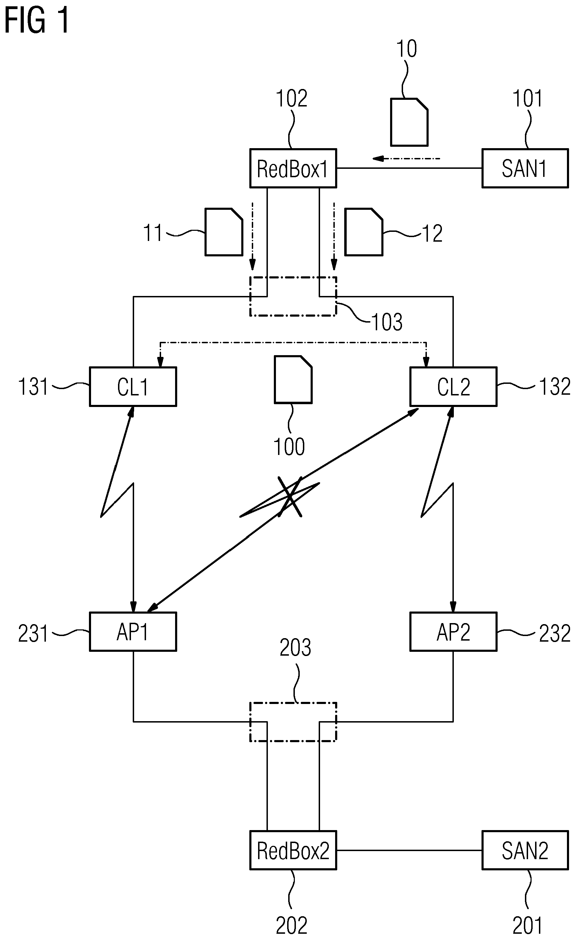

Das in Figur 1 dargestellte industrielle Kommunkationssystem umfasst eine erste 102 und eine zweite PRP-Redbox 202, die jeweils zumindest 3 Kommunikationsnetzanschlüsse aufweisen. Die erste PRP-Redbox 102 ist im vorliegenden Ausführungsbeispiel über ihren ersten und über ihren zweiten Kommunikationsnetzanschluss mittelbar jeweils mit einer WLAN-Teilnehmerstation 131, 132 verbunden. In entsprechender Weise ist die zweite PRP-Redbox 202 über ihren ersten und über ihren zweiten Kommunikationsnetzanschluss mittelbar jeweils mit einer WLAN-Basisstation 231, 232 verbunden. Die beiden PRP-Redboxen 102, 202 weisen als dritten Kommunikationsnetzanschluss jeweils einen Interlink-Port auf.

Im vorliegenden Ausführungsbeispiel ist an den Interlink-Port der ersten PRP-Redbox 102 auf Leitsystemebene ein SCADA-System 101 (Supervisory Control and Data Acquisition) angeschlossen. Dagegen ist an den Interlink-Port der zweiten PRP-Redbox 202 auf Feldebene ein Sensor- bzw. Aktorsystem 201 eines industriellen Automatisierungssystems angeschlossen. Dieses Sensor- bzw. Aktorsystem 201 kann beispielsweise ein Fertigungsroboter, ein Antrieb für ein Fördersystem oder eine Bedien- und Beobachtungsstation an einer Fertigungslinie sein.

Die erste 102 und zweite PRP-Redbox 202 weisen jeweils eine mit ihren ersten und zweiten Kommunikationsanschlüssen verbundene Signalverarbeitungseinheit auf, die eine Multiplexereinheit zur parallelen Weiterleitung zu sendender Datenrahmen (Frames) an den jeweiligen ersten und zweiten Kommunikationsnetzanschluss aufweist. Durch eine Multiplexereinheit werden von einem einfach an ein industrielles Kommunikationsnetz angebundenen Kommunikations- bzw. Automatisierungsgerät gesendete Datenrahmen 10 dupliziert. Zueinander redundante Datenrahmen 11, 12 werden durch eine einheitliche Sequenznummer gekennzeichnet, die durch die jeweilige Signalverarbeitungseinheit an redundant zu übermittelnde Datenrahmen vergeben wird. Die zueinander redundanten Datenrahmen 11, 12 werden dann von der jeweiligen PRP-Redbox 102, 202 an eine erste und zweite WLAN-Teilnehmer- bzw. WLAN-Basisstation 131-132, 231-232 weitergeleitet.

Darüber hinaus weisen die erste 102 und zweite PRP-Redbox 202 jeweils eine Redundanzbehandlungseinheit zur Verarbeitung vom jeweiligen ersten und zweiten Kommunikationsnetzanschluss empfangener Datenrahmen auf. Die Redundanzbehandlungseinheit umfasst wiederum eine Filtereinheit, die für eine Detektion und Ausfilterung empfangener redundanter Datenrahmen vorgesehen ist. Des weiteren ist der jeweiligen Signalverarbeitungseinheit jeweils eine Speichereinheit zugeordnet, die Sequenznummern bereits fehlerfrei empfangener Datenrahmen speichert. Bei Empfang eines neuen Datenrahmens führt die Redundanzbehandlungseinheit eine Überprüfung auf Übereinstimmung mit einer bereits gespeicherten Sequenznummer durch. Redundant zu übermittelnde Datenrahmen werden im vorliegenden Ausführungsbeispiel entsprechend Parallel Redundancy Protocol übertragen. Grundsätzlich ist auch eine Übertragung entsprechend High-availability Seamless Redundancy möglich. Nachfolgende Ausführungen gelten hierfür analog.

Die WLAN-Teilnehmerstationen 131, 132 sind dafür konfiguriert, dass sie untereinander Meldungen 100 über verfügbare WLAN-Basisstationen austauschen. Mittels der Meldungen 100 koordinieren die WLAN-Teilnehmerstationen 131, 132, welche der WLAN-Teilnehmerstationen 131, 132 momentan bzw. innerhalb eines definierbaren Zeitraums eine exklusive Berechtigung für eine Funkverbindung zu einer ausgewählten WLAN-Basisstation hat. Die WLAN-Teilnehmerstationen 131, 132 geben in den Meldungen 100 jeweils eine temporäre exklusive Zuordnung einer WLAN-Basisstation 231, 232 zu einer WLAN-Teilnehmerstation 131, 132 an. Darüber hinaus führen die WLAN-Teilnehmerstationen 131, 132 mittels der Meldungen 100 bei einem Abbau oder einer ausbleibenden Nutzung einer Funkverbindung zu einer ausgewählten WLAN-Basisstation 231, 232 eine Freigabe einer zuvor genutzten Funkverbindung zur ausgewählten WLAN-Basisstation 231, 232 durch. Insbesondere vermeiden die WLAN-Teilnehmerstationen 131, 132 mittels der Meldungen 100, dass sich mehrere der ersten PRP-Redbox 102 zugeordnete WLAN-Teilnehmerstationen 131, 132 während eines Roaming-Vorgangs gleichzeitig mit derselben WLAN-Basisstation 231, 232 verbinden.

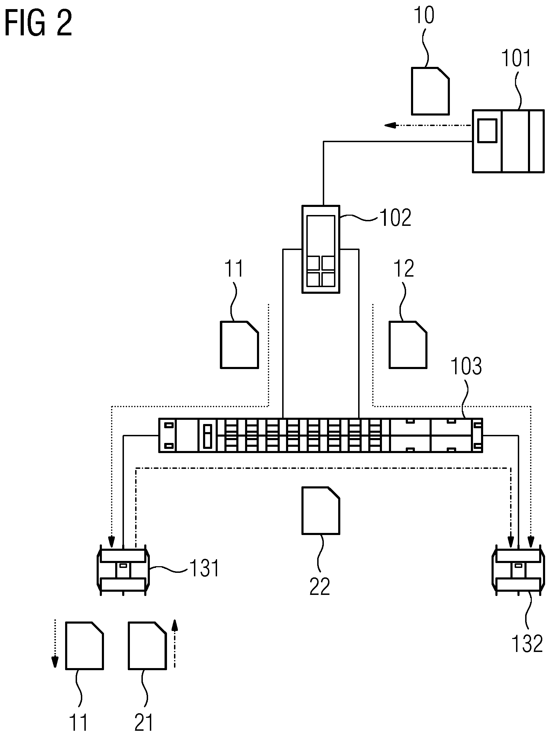

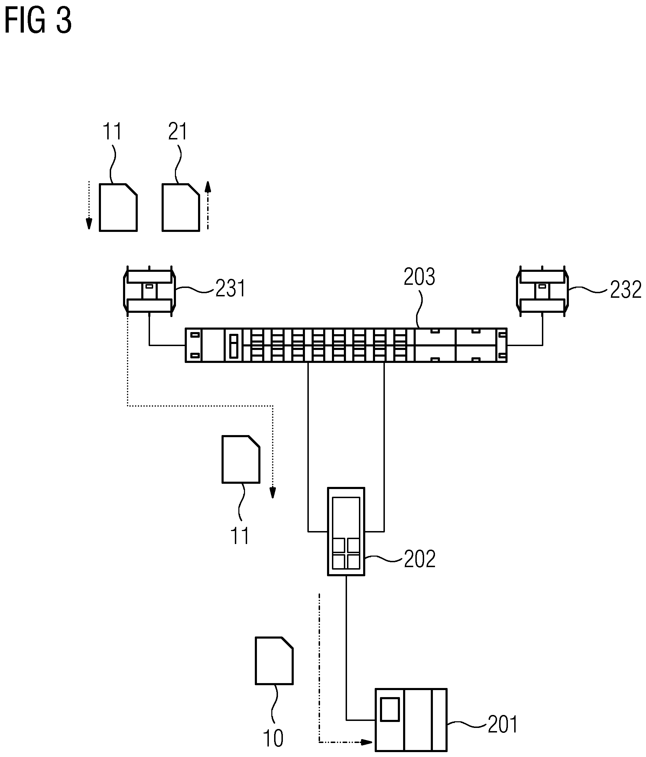

Entsprechend der Detaildarstellung des ersten Teils des industriellen Kommunikationssystems ist die erste PRP-Redbox 102 gemäß Figur 2 über ihren ersten und zweiten Kommunikationsnetzanschluss redundant an einen ersten VLAN-fähigen Switch 103 angeschlossen. In analoger Weise ist die zweite PRP-Redbox 202 entsprechend der Detaildarstellung des zweiten Teils des industriellen Kommunikationssystems gemäß Figur 3 über ihren ersten und zweiten Kommunikationsnetzanschluss redundant an einen zweiten VLAN-fähigen Switch 203 angeschlossen. Der erste 103 und der zweite Switch 203 umfassen jeweils eine Mehrzahl von Kommunikationsnetzanschlüssen und ein die Kommunikationsnetzanschlüsse miteinander verbindendes Koppelelement. Ein solches Koppelelement kann beispielsweise durch einen Hochgeschwindigkeitsbus bzw. einen Backplane Switch mit zugeordnetem Controller realisiert sein.

Vom ersten Kommunikationsnetzanschluss der ersten 102 und der zweiten PRP-Redbox 202 an den jeweiligen Switch 103, 203 übermittelte Datenrahmen werden einem ersten VLAN zugeordnet. Analog dazu werden vom zweiten Kommunikationsnetzanschluss der ersten 102 und der zweiten PRP-Redbox 202 an den jeweiligen Switch 103, 203 übermittelte Datenrahmen einem zweiten VLAN zugeordnet. Dem ersten VLAN zugeordnete Datenrahmen werden mittels der jeweiligen ersten WLAN-Teilnehmer- bzw. WLAN-Basisstation 131, 231 über ein erstes WLAN-Netz mit einer ersten WLAN-SSID gesendet, während dem zweiten VLAN zugeordnete Datenrahmen mittels der jeweiligen zweiten WLAN-Teilnehmer- bzw. WLAN-Basisstation 132, 232 über ein zweites WLAN-Netz mit einer zweiten WLAN-SSID gesendet werden. Dabei sind die erste WLAN-SSID und die zweite WLAN-SSID voneinander verschieden. Grundsätzlich können die ersten 131, 231 und zweiten WLAN-Teilnehmer- bzw. WLAN-Basisstationen 132, 232 für sonstigen Datenverkehr auch dem zweiten bzw. ersten WLAN-Netz zugeordnet sein.

Bei einem erfolgreichen Empfang eines über das erste oder zweite WLAN-Netz gesendeten Datenrahmens übermitteln die WLAN-Teilnehmer- bzw. WLAN-Basisstationen 131-132, 231-232 empfängerseitig eine Acknowledge-Meldung 21 an eine senderseitige WLAN-Teilnehmer- bzw. WLAN-Basisstation 131. Bei Empfang einer Acknowledgement-Meldung 21 übermittelt diese senderseitige WLAN-Teilnehmer- bzw. WLAN-Basisstation 131 eine Drop-Frame-Meldung 22 an ihre zugeordnete Partner-WLAN-Teilnehmer- bzw. -Basisstation 132, die an denselben Switch 103 angeschlossen ist. Auf eine solche Drop-Frame-Meldung 22 unterbindet die jeweilige Partner-WLAN-Teilnehmer- bzw. -Basisstation 132 ein Senden eines redundanten Datenrahmens mit einer Sequenznummer, die einer senderseitig empfangenen Acknowledgement-Meldung 21 zugeordnet ist. Dies kann beispielsweise durch ein Löschen bzw. Verwerfen eines redundanten Datenrahmens aus einer Sende-Queue der Partner-WLAN-Teilnehmer- bzw. -Basisstation erfolgen, insbesondere sobald dieser Datenrahmen nach Übermittlung vom jeweiligen Switch an der Partner-WLAN-Teilnehmer- bzw. -Basisstation eintrifft.

Für einen erhöhten Datendurchsatz hinsichtlich per WLAN übermittelter Datenrahmen werden zu sendende Datenrahmen nach Duplizierung mittels einer PRP-Redbox durch die WLAN-Teilnehmer- bzw. WLAN-Basisstationen vorzugsweise nicht mehr entsprechend FIFO-Prinzip gesendet, sondern in ihrer Sendereihenfolge nach Ziel-MAC-Adressen sortiert. Innerhalb einer Ziel-MAC-Adresse erfolgt dabei eine Beibehaltung einer ursprünglichen Reihenfolge entsprechend Empfangszeitpunkten an der jeweiligen WLAN-Teilnehmer- bzw. WLAN-Basisstation. Vorzugsweise wird darüber hinaus an einander zugeordneten Partner-WLAN-Teilnehmer- bzw. -Basisstationen durch ein koordiniertes Sende-Queue-Management sichergestellt, dass über die beiden Partner-WLAN-Teilnehmer- bzw. -Basisstationen niemals gleichzeitig Datenrahmen an dieselbe Ziel-MAC-Adresse übermittelt werden.

## Patentansprüche

1. Redundant betreibbares industrielles Kommunikationssystem mit
- zumindest einem ersten und einem zweiten redundant an ein industrielles Kommunikationsnetz angebundenen Kommunikationsgerät mit jeweils
- zumindest einem ersten und einem zweiten Kommunikationsnetzanschluss,
- einer mit dem ersten und zweiten Kommunikationsnetzanschluss verbundenen Signalverarbeitungseinheit, die eine Multiplexereinheit zur parallelen Weiterleitung zu sendender Datenrahmen an beide Kommunikationsnetzanschlüsse und eine Redundanzbehandlungseinheit zur Verarbeitung von beiden Kommunikationsnetzanschlüssen empfangener Datenrahmen aufweist, wobei die Redundanzbehandlungseinheit eine Filtereinheit umfasst, die für eine Detektion empfangener redundanter Datenrahmen ausgestaltet und eingerichtet ist,
- wobei das erste Kommunikationsgerät über seinen ersten und über seinen zweiten Kommunikationsnetzanschluss mittel- oder unmittelbar jeweils mit einer Funk-Teilnehmerstation verbunden ist,
- wobei das zweite Kommunikationsgerät über seinen ersten und über seinen zweiten Kommunikationsnetzanschluss mittel- oder unmittelbar jeweils mit einer Funk-Basisstation verbunden ist,
**dadurch gekennzeichnet, dass**
- die Funk-Teilnehmerstationen dafür ausgestaltet und eingerichtet sind, dass sie untereinander Meldungen über verfügbare Funk-Basisstationen austauschen,
- die Funk-Teilnehmerstationen dafür ausgestaltet und eingerichtet sind, dass mittels der Meldungen koordiniert wird, welche der Funk-Teilnehmerstationen momentan und/oder innerhalb eines definierbaren Zeitraums eine exklusive Berechtigung für eine Funkverbindung zu einer ausgewählten Funk-Basisstation hat,
- die Funk-Teilnehmerstationen dafür ausgestaltet und eingerichtet sind, dass in den Meldungen jeweils eine temporäre exklusive Zuordnung einer Funk-Basisstation zu einer Funk-Teilnehmerstation angegeben wird,
- die Funk-Teilnehmerstationen dafür ausgestaltet und eingerichtet sind, dass mittels der Meldungen vermieden wird, dass sich mehrere dem ersten Kommunikationsgerät zugeordnete Funk-Teilnehmerstationen während eines Roaming-Vorgangs gleichzeitig mit derselben Funk-Basisstation verbinden.

2. Kommunikationssystem nach Anspruch 1,
bei dem die Funk-Teilnehmerstationen dafür ausgestaltet und eingerichtet sind, dass mittels der Meldungen bei einem Abbau oder einer ausbleibenden Nutzung einer Funkverbindung zu einer ausgewählten Funk-Basisstation eine Freigabe einer zuvor genutzten Funkverbindung zur ausgewählten Funk-Basisstation erfolgt.

3. Kommunikationssystem nach einem der Ansprüche 1 oder 2,
bei dem zueinander redundante Datenrahmen durch eine einheitliche Sequenznummer gekennzeichnet sind, und bei dem die Signalverarbeitungseinheiten des ersten und des zweiten Kommunikationsgeräts für eine Vergabe einer Sequenznummer an einen redundant zu übermittelnden Datenrahmen ausgestaltet und eingerichtet sind.

4. Kommunikationssystem nach Anspruch 3,
bei dem die Funk-Basisstationen dafür ausgestaltet und eingerichtet sind, dass bei einem erfolgreichen Empfang eines über ein Funknetz gesendeten Datenrahmens empfängerseitig eine Bestätigungsmeldung an eine senderseitige Funk-Teilnehmerstation übermittelt wird, und bei dem die Funk-Teilnehmerstationen dafür ausgestaltet und eingerichtet sind, dass ein Senden eines redundanten Datenrahmens mit einer Sequenznummer, die einer senderseitig empfangenen Bestätigungsmeldung zugeordnet ist, unterbunden wird.

5. Kommunikationssystem nach einem der Ansprüche 1 bis 4,
bei dem eine Übertragung redundant zu übermittelnder Datenrahmen entsprechend Parallel Redundancy Protocol erfolgt und bei dem die Funk-Teilnehmerstationen und die Funk-Basisstationen zumindest einem Wireless Local Area Network, einem WiMAX-, einem UMTS-, einem LTE-Mobilfunknetz oder einem sonstigen Mobilfunknetz zugeordnet sind.

6. Kommunikationssystem nach Anspruch 5,
bei dem das erste und zweite Kommunikationsgerät eine PRP-Redbox sind und bei dem über das erste und zweite Kommunikationsgerät jeweils ein einfach angebundenes Kommunikationsgerät mit dem industriellen Kommunikationsnetz verbunden ist.

7. Kommunikationssystem nach einem der Ansprüche 1 bis 6,
bei dem zumindest ein erstes und ein zweites dem industriellen Kommunikationsnetz zugeordnetes Netzinfrastrukturgerät mit jeweils einer Mehrzahl von Kommunikationsnetzanschlüssen und einem die Kommunikationsnetzanschlüsse miteinander verbindenden Koppelelement vorgesehen sind, bei dem das erste Kommunikationsgerät über seinen ersten und zweiten Kommunikationsnetzanschluss redundant an das erste Netzinfrastrukturgerät angeschlossen ist, bei dem das zweite Kommunikationsgerät über seinen ersten und zweiten Kommunikationsnetzanschluss redundant an das zweite Netzinfrastrukturgerät angeschlossen ist, bei dem das erste und zweite Kommunikationsgerät und/oder das erste und zweite Netzinfrastrukturgerät dafür ausgestaltet und eingerichtet sind, dass vom ersten Kommunikationsnetzanschluss des ersten und des zweiten Kommunikationsgeräts an das jeweilige Netzinfrastrukturgerät übermittelte Datenrahmen einem ersten virtuellen lokalen Netz zugeordnet werden und dass vom zweiten Kommunikationsnetzanschluss des ersten und des zweiten Kommunikationsgeräts an das jeweilige Netzinfrastrukturgerät übermittelte Datenrahmen einem zweiten virtuellen lokalen Netz zugeordnet werden, bei dem die Funk-Teilnehmerstationen an das erste Netzinfrastrukturgerät angeschlossen sind, bei dem die Funk-Basisstationen an das zweite Netzinfrastrukturgerät angeschlossen sind und bei dem die Funk-Teilnehmerstationen dafür ausgestaltet und eingerichtet sind, dass dem ersten virtuellen lokalen Netz zugeordnete Datenrahmen mittels der ersten Funk-Teilnehmerstation über ein erstes Funknetz gesendet werden und dass dem zweiten virtuellen lokalen Netz zugeordnete Datenrahmen mittels der zweiten Funk-Teilnehmerstation über ein zweites Funknetz gesendet werden.

8. Verfahren zum redundanten Betrieb eines industriellen Kommunikationssystems, bei dem
- zumindest ein erstes und ein zweites Kommunikationsgerät redundant an ein industrielles Kommunikationsnetz angebunden werden, wobei das erste und zweite Kommunikationsgerät jeweils
- zumindest einen ersten und einen zweiten Kommunikationsnetzanschluss und
- eine mit dem ersten und zweiten Kommunikationsnetzanschluss verbundene Signalverarbeitungseinheit aufweisen, die zu sendende Datenrahmen parallel an beide Kommunikationsnetzanschlüsse weiterleitet und von beiden Kommunikationsnetzanschlüssen empfangene redundante Datenrahmen detektiert,
- das erste Kommunikationsgerät über seinen ersten und über seinen zweiten Kommunikationsnetzanschluss mittel- oder unmittelbar jeweils mit einer Funk-Teilnehmerstation verbunden ist,
- das zweite Kommunikationsgerät über seinen ersten und über seinen zweiten Kommunikationsnetzanschluss mittel- oder unmittelbar jeweils mit einer Funk-Basisstation verbunden ist,
**dadurch gekennzeichnet, dass**
- die Funk-Teilnehmerstationen untereinander Meldungen über verfügbare Funk-Basisstationen austauschen,
- die Funk-Teilnehmerstationen mittels der Meldungen koordinieren, welche der Funk-Teilnehmerstationen momentan und/oder innerhalb eines definierbaren Zeitraums eine exklusive Berechtigung für eine Funkverbindung zu einer ausgewählten Funk-Basisstation hat,
- die Funk-Teilnehmerstationen in den Meldungen jeweils eine temporäre exklusive Zuordnung einer Funk-Basisstation zu einer Funk-Teilnehmerstation angeben,
- die Funk-Teilnehmerstationen mittels der Meldungen vermeiden, dass sich mehrere dem ersten Kommunikationsgerät zugeordnete Funk-Teilnehmerstationen während eines Roaming-Vorgangs gleichzeitig mit derselben Funk-Basisstation verbinden.

9. Verfahren nach Anspruch 8,
bei dem die Funk-Teilnehmerstationen mittels der Meldungen bei einem Abbau oder einer ausbleibenden Nutzung einer Funkverbindung zu einer ausgewählten Funk-Basisstation eine Freigabe einer zuvor genutzten Funkverbindung zur ausgewählten Funk-Basisstation durchführen.

10. Verfahren nach einem der Ansprüche 8 oder 9,
bei dem zueinander redundante Datenrahmen durch eine einheitliche Sequenznummer gekennzeichnet werden und bei dem die Signalverarbeitungseinheiten des ersten und des zweiten Kommunikationsgeräts eine Sequenznummer an einen redundant zu übermittelnden Datenrahmen vergeben.

11. Verfahren nach Anspruch 10,
bei dem die Funk-Basisstationen bei einem erfolgreichen Empfang eines über ein Funknetz gesendeten Datenrahmens empfängerseitig eine Bestätigungsmeldung an eine senderseitige Funk-Teilnehmerstation übermitteln und bei dem die Funk-Basisstationen ein Senden eines redundanten Datenrahmens mit einer Sequenznummer unterbinden, die einer senderseitig empfangenen Bestätigungsmeldung zugeordnet ist.

12. Verfahren nach einem der Ansprüche 8 bis 11,
bei dem redundant zu übermittelnde Datenrahmen entsprechend Parallel Redundancy Protocol übertragen werden.

13. Verfahren nach einem der Ansprüche 8 bis 12,
bei dem zumindest ein erstes und ein zweites dem industriellen Kommunikationsnetz zugeordnetes Netzinfrastrukturgerät vorgesehen sind, die jeweils eine Mehrzahl von Kommunikationsnetzanschlüssen und ein die Kommunikationsnetzanschlüsse miteinander verbindendes Koppelelement aufweisen, bei dem das erste Kommunikationsgerät über seinen ersten und zweiten Kommunikationsnetzanschluss redundant an das erste Netzinfrastrukturgerät angeschlossen ist, bei dem das zweite Kommunikationsgerät über seinen ersten und zweiten Kommunikationsnetzanschluss redundant an das zweite Netzinfrastrukturgerät angeschlossen ist, bei dem vom ersten Kommunikationsnetzanschluss des ersten und des zweiten Kommunikationsgeräts an das jeweilige Netzinfrastrukturgerät übermittelte Datenrahmen einem ersten virtuellen lokalen Netz und vom zweiten Kommunikationsnetzanschluss des ersten und des zweiten Kommunikationsgeräts an das jeweilige Netzinfrastrukturgerät übermittelte Datenrahmen einem zweiten virtuellen lokalen Netz zugeordnet werden, bei dem die Funk-Teilnehmerstationen an das erste Netzinfrastrukturgerät angeschlossen sind, bei dem die Funk-Basisstationen an das zweite Netzinfrastrukturgerät angeschlossen sind, wobei die erste Funk-Teilnehmerstation dem ersten virtuellen lokalen Netz zugeordnete Datenrahmen über ein erstes Funknetz und die zweite Funk-Teilnehmerstation dem zweiten virtuellen lokalen Netz zugeordnete Datenrahmen über ein zweites Funknetz sendet.

14. Funk-Teilnehmerstation zur Durchführung eines Verfahrens nach einem der Ansprüche 8 bis 13,
**dadurch gekennzeichnet, dass** die Funk-Teilnehmerstation dafür ausgestaltet und eingerichtet ist, dass sie mit einer weiteren Funk-Teilnehmerstation Meldungen über verfügbare Funk-Basisstationen austauscht und dass mittels der Meldungen koordiniert wird, welche Funk-Teilnehmerstation momentan und/oder innerhalb eines definierbaren Zeitraums eine exklusive Berechtigung für eine Funkverbindung zu einer ausgewählten Funk-Basisstation hat, und dass die Funk-Teilnehmerstationen in den Meldungen jeweils eine temporäre exklusive Zuordnung einer Funk-Basisstation zu einer Funk-Teilnehmerstation angeben und mittels der Meldungen vermeiden, dass sich mehrere dem ersten Kommunikationsgerät zugeordnete Funk-Teilnehmerstationen während eines Roaming-Vorgangs gleichzeitig mit derselben Funk-Basisstation verbinden.

## Claims

1. Redundantly operable industrial communication system having
- at least a first and a second communication device redundantly connected to an industrial communication network and respectively having
- at least a first and a second communication network connection,
- a signal processing unit which is connected to the first and second communication network connections and has a multiplexer unit for forwarding data frames to be transmitted to both communication network connections in a parallel manner and a redundancy handling unit for processing data frames received from both communication network connections, wherein the redundancy handling unit comprises a filter unit which is configured and set up to detect received redundant data frames,
- wherein the first communication device is respectively connected to a radio subscriber station directly or indirectly via its first and second communication network connections,
- wherein the second communication device is respectively connected to a radio base station directly or indirectly via its first and second communication network connections, **characterized in that**
- the radio subscriber stations are configured and set up to interchange messages relating to available radio base stations with one another,
- the radio subscriber stations are configured and set up such that the messages are used to coordinate which of the radio subscriber stations has an exclusive authorization for a radio connection to a selected radio base station currently and/or within a definable period,
- the radio subscriber stations are configured and set up such that a temporary exclusive assignment of a radio base station to a radio subscriber station is respectively stated in the messages,
- the radio subscriber stations are configured and set up such that the messages are used to avoid a plurality of radio subscriber stations assigned to the first communication device being simultaneously connected to the same radio base station during a roaming operation.

2. Communication system according to Claim 1,
in which the radio subscriber stations are configured and set up such that, in the event of a radio connection to a selected radio base station being cleared or not being used, the messages are used to release a previously used radio connection to the selected radio base station.

3. Communication system according to either of Claims 1 and 2,
in which mutually redundant data frames are identified by a uniform sequence number, and in which the signal processing units of the first and second communication devices are configured and set up to allocate a sequence number to a data frame to be redundantly transmitted.

4. Communication system according to Claim 3,
in which the radio base stations are configured and set up such that, if a data frame transmitted via a radio network is successfully received, a confirmation message is transmitted, at the receiver end, to a radio subscriber station at the transmitter end, and in which the radio subscriber stations are configured and set up such that transmission of a redundant data frame having a sequence number assigned to a confirmation message received at the transmitter end is prevented.

5. Communication system according to one of Claims 1 to 4,
in which data frames to be redundantly transmitted are transmitted according to the Parallel Redundancy Protocol, and in which the radio subscriber stations and the radio base stations are assigned at least to a Wireless Local Area Network, a WiMAX, a UMTS, an LTE mobile radio network or another mobile radio network.

6. Communication system according to Claim 5,
in which the first and second communication devices are a PRP RedBox, and in which a singly connected communication device is respectively connected to the industrial communication network via the first and second communication devices.

7. Communication system according to one of Claims 1 to 6,
in which at least a first and a second network infrastructure device assigned to the industrial communication network and respectively having a plurality of communication network connections and a coupling element connecting the communication network connections to one another are provided, in which the first communication device is redundantly connected to the first network infrastructure device via its first and second communication network connections, in which the second communication device is redundantly connected to the second network infrastructure device via its first and second communication network connections, in which the first and second communication devices and/or the first and second network infrastructure devices are configured and set up such that data frames transmitted from the first communication network connection of the first and second communication devices to the respective network infrastructure device are assigned to a first virtual local area network and data frames transmitted from the second communication network connection of the first and second communication devices to the respective network infrastructure device are assigned to a second virtual local area network, in which the radio subscriber stations are connected to the first network infrastructure device, in which the radio base stations are connected to the second network infrastructure device, and in which the radio subscriber stations are configured and set up such that data frames assigned to the first virtual local area network are transmitted via a first radio network by means of the first radio subscriber station and data frames assigned to the second virtual local area network are transmitted via a second radio network by means of the second radio subscriber station.

8. Method for redundantly operating an industrial communication system, in which
- at least a first and a second communication device are redundantly connected to an industrial communication network, wherein the first and second communication devices respectively have
- at least a first and a second communication network connection and
- a signal processing unit which is connected to the first and second communication network connections and forwards data frames to be transmitted to both communication network connections in a parallel manner and detects redundant data frames received from both communication network connections,
- the first communication device is respectively connected to a radio subscriber station directly or indirectly via its first and second communication network connections,
- the second communication device is respectively connected to a radio base station directly or indirectly via its first and second communication network connections,
**characterized in that**
- the radio subscriber stations interchange messages relating to available radio base stations with one another,
- the radio subscriber stations use the messages to coordinate which of the radio subscriber stations has an exclusive authorization for a radio connection to a selected radio base station currently and/or within a definable period,
- the radio subscriber stations respectively state a temporary exclusive assignment of a radio base station to a radio subscriber station in the messages,
- the radio subscriber stations use the messages to avoid a plurality of radio subscriber stations assigned to the first communication device being simultaneously connected to the same radio base station during a roaming operation.

9. Method according to Claim 8,
in which the radio subscriber stations, in the event of a radio connection to a selected radio base station being cleared or not being used, use the messages to release a previously used radio connection to the selected radio base station.

10. Method according to either of Claims 8 and 9,
in which mutually redundant data frames are identified by a uniform sequence number, and in which the signal processing units of the first and second communication devices allocate a sequence number to a data frame to be redundantly transmitted.

11. Method according to Claim 10,
in which the radio base stations, if a data frame transmitted via a radio network is successfully received at the receiver end, transmit a confirmation message to a radio subscriber station at the transmitter end, and in which the radio base stations prevent transmission of a redundant data frame having a sequence number assigned to a confirmation message received at the transmitter end.

12. Method according to one of Claims 8 to 11,
in which data frames to be redundantly transmitted are transmitted according to the Parallel Redundancy Protocol.

13. Method according to one of Claims 8 to 12,
in which at least a first and a second network infrastructure device assigned to the industrial communication network and respectively having a plurality of communication network connections and a coupling element connecting the communication network connections to one another are provided, in which the first communication device is redundantly connected to the first network infrastructure device via its first and second communication network connections, in which the second communication device is redundantly connected to the second network infrastructure device via its first and second communication network connections, in which data frames transmitted from the first communication network connection of the first and second communication devices to the respective network infrastructure device are assigned to a first virtual local area network and data frames transmitted from the second communication network connection of the first and second communication devices to the respective network infrastructure device are assigned to a second virtual local area network, in which the radio subscriber stations are connected to the first network infrastructure device, in which the radio base stations are connected to the second network infrastructure device, wherein the first radio subscriber station transmits data frames assigned to the first virtual local area network via a first radio network and the second radio subscriber station transmits data frames assigned to the second virtual local area network via a second radio network.

14. Radio subscriber station for carrying out a method according to one of Claims 8 to 13,
**characterized in that** the radio subscriber station is configured and set up such that it interchanges messages relating to available radio base stations with a further radio subscriber station and the messages are used to coordinate which radio subscriber station has an exclusive authorization for a radio connection to a selected radio base station currently and/or within a definable period, and **in that** the radio subscriber stations respectively state a temporary exclusive assignment of a radio base station to a radio subscriber station in the messages and use the messages to avoid a plurality of radio subscriber stations assigned to the first communication device being simultaneously connected to the same radio base station during a roaming operation.

## Revendications

1. Système de communication industriel pouvant fonctionner de manière redondante et comprenant
- au moins un premier appareil et un deuxième appareil de communication, liés de manière redondante à un réseau de communication industriel et ayant chacun
- au moins un premier et un deuxième accès au réseau de communication,
- une unité de traitement du signal, qui est reliée au premier et au deuxième accès au réseau de communication et qui a une unité de multiplexage pour l'acheminement en parallèle de trames de données à envoyer aux deux accès au réseau de communication et à une unité de traitement de redondance pour le traitement de trames de données reçues aux deux accès au réseau de communication, l'unité de traitement de redondance comprenant une unité de filtrage conformée et conçue pour une détection de trames de données redondantes reçues,
- dans lequel le premier appareil de communication est relié, par son premier et par son deuxième accès au réseau de communication, directement ou indirectement, respectivement, à une station radio de participant,
- dans lequel le deuxième appareil de communication est relié, par son premier et son deuxième accès au réseau de communication, directement ou indirectement, respectivement, à une station radio de base,
**caractérisé en ce que**
- les stations radio de participant sont conformées et conçues de manière à échanger des messages entre elles par des stations radio de base disponibles,
- les stations radio de participant sont conformées et conçues de manière à ce qu'il soit coordonné, au moyen des messages, celle des stations radio de participant, qui a, momentanément et/ou dans un laps de temps pouvant être défini, une autorisation exclusive d'une liaison radio à une station radio de base sélectionnée,
- les stations radio de participant sont conformées et conçues de manière à indiquer dans les messages, respectivement, une affectation exclusive temporaire d'une station radio de base à une station radio de participant,
- les stations radio de participant sont conformées et conçues de manière à ce qu'il soit empêché, au moyen des messages, que plusieurs stations radio de participant, affectées au premier appareil de communication, soient reliées, pendant une opération de roaming, simultanément à la même station radio de base.

2. Système de communication suivant la revendication 1,
dans lequel les stations radio de participant sont conformées et conçues de manière à effectuer, au moyen des messages, lors de la fin ou d'une absence d'utilisation d'une liaison radio avec une station radio de base sélectionnée, une validation d'une liaison radio utilisée précédemment avec la station radio de base sélectionnée.

3. Système de communication suivant l'une des revendications 1 ou 2,
dans lequel des trames de données redondantes les unes avec les autres sont **caractérisées par** un numéro de séquence unitaire et dans lequel les unités de traitement du signal du premier et du deuxième appareil de communication sont conformées et conçues pour une attribution d'un numéro de séquence à une trame de données à transmettre de manière redondante.

4. Système de communication suivant la revendication 3,
dans lequel les stations radio de base sont conformées et conçues de manière à transmettre, lors d'une réception réussie d'une trame de donnée envoyée par un réseau radio, du côté du récepteur, un message de confirmation à une station radio de participant du côté de l'émetteur et dans lequel les stations radio de participant sont conformées et conçues de manière à supprimer une émission d'une trame de données redondante ayant un numéro de séquence, qui est affecté à un message de confirmation reçu du côté de l'émetteur.

5. Système de communication suivant l'une des revendications 1 à 4, dans lequel une transmission de trame de données à transmettre de manière redondante s'effectue conformément au Protocol Parallel Redundancy et dans lequel les stations radio de participant et les stations radio de base sont associées au moins à un Wireless Local Area Network, à un réseau radio mobile WiMAX, UMTS, LTE ou à un autre réseau radio mobile.

6. Système de communication suivant la revendication 5,
dans lequel le premier et le deuxième appareils de communication sont un PRP-Redbox et dans lequel, par le premier et le deuxième appareils de communication, respectivement, un appareil de communication lié simplement est relié au réseau de communication industriel.

7. Système de communication suivant l'une des revendications 1 à 6,
dans lequel il est prévu au moins un premier et un deuxième appareils d'infrastructure de réseau associés au réseau de communication industriel, ayant chacun une pluralité d'accès au réseau de communication et un élément de couplage reliant entre eux les accès au réseau de communication, dans lequel le premier appareil de communication est raccordé, par son premier et deuxième accès au réseau de communication, au premier appareil d'infrastructure de réseau, dans lequel le deuxième appareil de communication est raccordé par son premier et deuxième accès au réseau de communication de manière redondante au deuxième appareil d'infrastructure du réseau, dans lequel le premier et le deuxième appareils de communication et/ou le premier et le deuxième appareils d'infrastructure du réseau sont conformés et conçus de manière à associer à un premier réseau local virtuel des trames de données transmises du premier accès au réseau de communication du premier et du deuxième appareils de communication à l'appareil d'infrastructure du réseau respectif et de manière à associer à un deuxième réseau local virtuel des trames de données transmises du deuxième accès au réseau de communication du premier et du deuxième appareils de communication à l'appareil d'infrastructure du réseau respectif, dans lequel les stations radio de participant sont raccordées au premier appareil d'infrastructure du réseau, dans lequel les stations radio de base sont raccordées au deuxième appareil d'infrastructure du réseau et dans lequel les stations radio de participant sont conformées et conçues de manière à envoyer des trames de données associées au premier réseau local virtuel, au moyen de la première station radio de participant, par un premier réseau radio, et de manière à envoyer des trames de données associées au deuxième réseau local virtuel, au moyen de la deuxième station radio de participant, par un deuxième réseau radio.

8. Procédé pour faire fonctionner de manière redondante un système de communication industriel, dans lequel
- on relie au moins un premier et un deuxième appareils de communication de manière redondante à un réseau de communication industriel, dans lequel le premier et le deuxième appareils de communication ont chacun
- au moins un premier et un deuxième accès au réseau de communication et
- une unité de traitement du signal, reliée au premier et au deuxième accès au réseau de communication, laquelle achemine des trames de données à envoyer en parallèle aux deux accès au réseau de communication et détecte des trames de données redondantes reçues par les deux accès au réseau de communication,
- le premier appareil de communication est relié par son premier et son deuxième accès au réseau de communication, directement ou indirectement, respectivement, à une station radio de participant,
- le deuxième appareil de communication est relié par son premier et son deuxième accès au réseau de communication, directement ou indirectement, respectivement, à une station radio de base,
**caractérisé en ce que**
- les stations radio de participant échangent entre elles des messages sur des stations radio de base disponibles,
- les stations radio de participant coordonnent, au moyen des messages, celle des stations radio de participant qui a, momentanément et/ou dans un laps de temps pouvant être défini, une autorisation exclusive d'une liaison radio avec une station radio de base sélectionnée,
- les stations radio de participant indiquent, dans les messages, respectivement, une affectation exclusive temporaire d'une station radio de base à une station radio de participant,
- les stations radio de participant empêchent, au moyen des messages, que plusieurs stations radio de participant affectées au premier appareil de communication soient, pendant une opération de roaming, reliées en même temps à la même station radio de base.

9. Procédé suivant la revendication 8,
dans lequel les stations radio de participant effectuent, au moyen des messages, lors d'une fin ou d'une inutilisation d'une liaison radio avec une station radio de base sélectionnée, une validation d'une liaison radio utilisée précédemment avec la station radio de base sélectionnée.

10. Procédé suivant l'une des revendications 8 ou 9,
dans lequel on caractérise des trames de données redondantes entre elles par un numéro de séquence unitaire et dans lequel les unités de traitement du signal du premier et du deuxième appareils de communication attribuent un numéro de séquence à une trame de données à transmettre de manière redondante.

11. Procédé suivant la revendication 10,
dans lequel les stations radio de base transmettent, lors d'une réception réussie d'une trame de données envoyée par un réseau radio, du côté du récepteur, un message de confirmation à une station radio de participant du côté de l'émetteur, et dans lequel les stations radio de base interdisent une émission d'une trame de données redondante ayant un numéro de séquence, qui est affecté à un message de confirmation reçu du côté de l'émetteur.

12. Procédé suivant l'une des revendications 8 à 11,
dans lequel on transmet les trames de données à transmettre de manière redondante, conformément au protocole Parallel Redundancy.

13. Procédés suivant l'une des revendications 8 à 12,
dans lequel il est prévu au moins un premier et un deuxième appareils d'infrastructure du réseau, qui sont associés au réseau de communication industriel et qui ont chacun une pluralité d'accès au réseau de communication et un élément de couplage reliant entre eux les accès au réseau de communication, dans lequel le premier appareil de communication est raccordé, par son premier et son deuxième accès au réseau de communication de manière redondante, au premier appareil d'infrastructure du réseau, dans lequel le deuxième appareil de communication est raccordé, par son premier et son deuxième accès au réseau de communication de manière redondante, au deuxième appareil d'infrastructure du réseau, dans lequel on affecte des trames de données transmises du premier accès au réseau de communication du premier et du deuxième appareils de communication à l'appareil d'infrastructure du réseau respectif à un premier réseau local virtuel et des trames de données transmises du deuxième accès au réseau de communication du premier et du deuxième appareils de communication à l'appareil d'infrastructure de réseau respectif à un deuxième réseau local virtuel, dans lequel les stations radio de participant sont raccordées au premier appareil d'infrastructure du réseau, dans lequel les stations radio de base sont raccordées au deuxième appareil d'infrastructure du réseau, la première station radio de participant envoyant des trames de données affectées au premier réseau local virtuel par un premier réseau radio et la deuxième station radio de participant envoyant des trames de données affectées au deuxième réseau local virtuel par un deuxième réseau radio.

14. Station radio de participant pour effectuer un procédé suivant l'une des revendications 8 à 13,
**caractérisée en ce que** la station radio de participant est conformée et conçue de manière à échanger avec une autre radio de participant des messages sur des stations radio de base disponibles et **en ce que**, au moyen des messages, il est coordonné la station radio de participant, qui a, momentanément et/ou dans un laps de temps pouvant être défini, une autorisation exclusive d'une liaison radio avec une station radio de base sélectionnée et **en ce que** les stations radio de participant indiquent, dans les messages, respectivement, une affectation exclusive temporaire d'une station radio de base à une station radio de participant et empêchent, au moyen des messages, que plusieurs des stations radio de participant affectées au premier appareil de communication se relient, pendant une opération de roaming, en même temps à la même station radio de base.
